# EUROPEAN PATENT APPLICATION

(11) **EP 1 603 024 A2**
(43) Date of publication of application: **07.12.2005**
(21) Application number: 05011408.1
(22) Date of filing: 25.05.2005
(51) Int. Cl.: G06F 3/033

(54) **Display device which enables information to be inputted by use of beams of light**

(30) Priority: 31.05.2004 JP 2004160816
(71) Applicant: Toshiba Matsushita Display Technology Co., Ltd., Minato-ku, Tokyo 108-0075 (JP)
(72) Inventor: Yoshida, Masahiro, Fukaya-shi Saitama-ken (JP); Nakamura, Takashi, Saitama-shi Saitama-ken (JP)
(74) Representative: HOFFMANN EITLE

(57) **Abstract**

Disclosed is a display device where, in order to distinguish between regions which react to environment light and regions which react to a source of light in a display screen, and in order to identify exact positional coordinates of the source of light, a signal processing IC divides image data, which has been generated from a beam of light made incident onto the display screen, for each of regions where the beam of light has been detected, on the basis of a gradation value of each pixels; calculates shape parameters for identifying the shape for each divided region; and calculates the position for each divided region.

## Description

### CROSS-REFERENCE TO RELATED APPLICATIONS

This application is based upon and claims the benefit of priority from Japanese Patent Application No. 2004-160816 filed on May 31, 2004; the entire contents of which are incorporated herein by reference.

### BACKGROUND OF THE INVENTION

### 1. Field of the Invention

The present invention relates to a display device which enables information to be inputted by use of beams of light irradiated from the outside onto a display screen thereof.

### 2. Description of the Related Art

Liquid crystal display devices have been widely used as display devices for various appliances such as cellular phones and note personal computers. A liquid crystal display device includes: a display unit where a thin film transistor (TFT), a liquid crystal capacitance and an auxiliary capacitance are arranged in each of the pixels located in the respective parts where a plurality of scanning lines and a plurality signal lines are crossed over with one another; drive circuits to drive the respective scanning lines; and drive circuits to drive the respective signal lines. The display unit is formed in a glass-made array substrate. In addition, recent development of integrated circuit technologies and recent practical use of processing technologies have enabled parts of the drive circuits to be formed in an array substrate. Accordingly, an overall liquid crystal display device has been intended to be made lighter in weight and smaller in size.

On the other hand, a liquid crystal display device has been developed which includes light-receiving sensors in its display unit, and which enables information to be inputted by use of beams of light. For example, photodiodes arranged in the respective pixels are used as the sensor.

Capacitors are connected respectively to photodiodes. An amount of electric charges in each of the capacitors varies depending on an amount of received beams of light which have been made incident onto the photodiode from the display screen. If voltages in the two respective ends of the capacitor were detected, image data concerning an object close to the display screen could be generated.

With regard to such a display device, a technique has been proposed which obtains image data with multiple gradations corresponding to irradiation intensities of beams of light made incident, from image data to be obtained under a plurality of conditions for an image pickup through image processing.

In addition, another technique has been proposed which inserts an image pickup frame between display frames where the respective images are displayed, thereby displaying an image and concurrently acquiring an image. If this technique were applied, a display device could be used as a coordinates inputting device by touching the display screen in the display device with a finger, or by irradiating beams of light onto the display screen with a pen-shaped source of light. A coordinates calculating algorithm concerned with this has been proposed.

However, if coordinates were inputted with the aforementioned display device, photodiodes react to even environment light made incident from the outside. This brings about a problem that a malfunction occurs depending on circumstances where the display device is being used.

### SUMMARY OF THE INVENTION

It is an object of the present invention to distinguish between regions which react to environment light and regions which react to a source of light in a display screen, and to identify exact positional coordinates of the source of light.

The first feature of a display device according to the present invention is in that the display device includes: a light detection unit configured to detect a beam of light made incident onto a display screen; a image data generating unit configured to generate image data on a basis of information concerning the detected beam of light; a region dividing unit configured to divide a region, where the beam of light has been detected, from the image data on the basis of a gradation value of each pixel; a shape calculating unit configured to calculate shape parameters for identifying a shape of each divided region; and a position calculating unit configured to calculate a position of each divided region.

According to this invention, the region dividing unit divides image data for each of the regions where beams of light have been respectively detected. Thereafter, for each of the regions, the shape calculating unit calculates the shape parameters, and the position calculating unit calculates the position. It is clearly able to distinguish whether a region where beams of light have been detected is a region which has reacted to environmental light of the outside or a region which has reacted to a source of light. In addition, if positions of the respective regions were used, the exact coordinates of the source of light could be identified.

The second feature of a display device according to the present invention is in that the region dividing unit assigns one label commonly to pixels in one of the regions which have detected the beam of light, and assigns another label to pixels in another of the regions which have detected the beam of light, on a basis of a definition that, in a case where gradation values respectively of two pixels which are adjacent to each other in any one of the upper, lower, left, right and diagonal directions are values indicating that the beam of light has been detected, the two pixels belong to the same region where the beam of light has detected, wherein the shape calculating unit calculates shape parameters respectively only for regions to which a common label has been assigned; and wherein the position calculating unit calculates positions respectively only for regions to which a common label has been assigned.

The third aspect of a display device according to the present invention is in that the shape parameters include at least one of an amount representing an area of the region, an amount representing a distribution width of the region in the horizontal direction, and an amount representing a distribution width of the region in the vertical direction.

### BRIEF DESCRIPTION OF THE DRAWINGS

Fig. 1 schematically shows an overall configuration of a display device according to a first embodiment, and shows a flow of processes to be performed by the display device according to the first embodiment.
Fig. 2 shows a configuration of a circuit of a display unit in the display device of Fig. 1.
Fig. 3 shows a configuration of a signal processing IC in the display device of Fig. 1.
Fig. 4 shows a display screen for the purpose of explaining a process of dividing image date into a plurality of regions.
Fig. 5 shows a diagram for the purpose of explaining a process of calculating shape parameters for each of the regions.
Fig. 6 shows a transition for the purpose of explaining a process of assigning a label to each of the regions.
Fig. 7 shows a transition of a table to be used for the process of assigning a label.
Fig. 8 shows an image under a condition where the inputting of coordinates by a pen-shaped source of light is being disturbed by noise due to environment light.
Fig. 9 shows an image in a state where the inputting of a coordinates by a pen-shaped source of light is being disturbed by noise due to bright environment light.
Fig. 10 shows a user interface which enables a plurality of sources of light to be attached to fingertips.
Fig. 11 shows a state where the plurality of sources of light of Fig. 10 are rotated.
Fig. 12 shows a diagram for the purpose of explaining an outline of simultaneous input through two points in a display device according to a second embodiment.
Fig. 13 shows a configuration of the display device according to the second embodiment.
Fig. 14 shows a diagram for the purpose of explaining a process of simultaneous input through two points in the display device of Fig. 13.

### DESCRIPTION OF THE EMBODIMENT

### FIRST EMBODIMENT

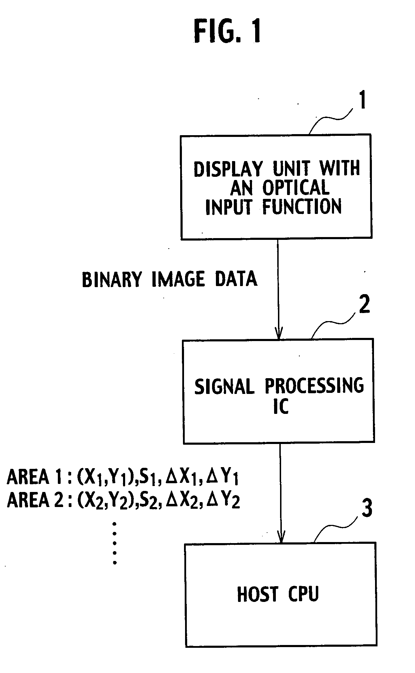

Fig. 1 schematically shows an overall configuration of a display device according to the present embodiment, and shows a flow of processes to be performed by the display device according to the embodiment. This display device includes a display unit 1 provided with an optical input function, a signal processing IC (Integrated Circuit) 2, and a host CPU 3.

In addition to displaying an image in a screen, the display unit 1 detects beams of light irradiated onto the screen by use of an optical sensor, and outputs the beams of light, as image data, to the signal processing IC 2. According to an example shown in Fig. 1, the display unit 1 concurrently includes a function of converting an analog signal from the optical sensor into a 1-bit digital signal, and outputs binary image data.

The signal processing IC 2 performs signal processes, such as noise reduction, on inputted image data, thereby correcting defects in the image which have been caused due to failure in the optical sensor and the optical input circuit. This correction removes isolated spotted defects and linear defects, for example, by use of a median filter or the like.

Furthermore, the signal processing IC 2 performs a labeling process of assigning labels respectively to all of the pixels in the image data in order to tell which pixel belongs to which region. Thereafter, for each of the regions to which different labels have been respectively assigned, the signal processing IC 2 calculates positional coordinates indicating the position of the region and shape parameters indicating the shape of the region.

In the example shown in Fig. 1, the horizontal direction of the image is defined as the X-axis, and the vertical direction of the image is defined as the Y-axis. Accordingly, coordinates are expressed by (X, Y). As its positional coordinates, the center coordinates of the region is calculated. The area S of the region, the distribution width ΔX in the X-axis direction and the distribution width ΔY in the Y-axis direction are calculated as the shape parameters.

For example, with regard to a region 1 to which a label [1] has been assigned, its center coordinates (X1, Y1), its area S1, its distribution width ΔX1 in the X-axis direction and its distribution width ΔY1 in the Y-axis direction are calculated. With regard to a region 2 to which a label [2] has been assigned, its center coordinates (X2, Y2), its area S2, its distribution width ΔX2 in the X-axis direction and its distribution width ΔY2 in the Y-axis direction are calculated.

Moreover, if regions to which other labels have been respectively assigned would exist, the positional coordinates and shape parameters are calculated for each of the regions in the same manner. All of the data concerning these regions is stored in a memory in the signal processing IC 2.

The host CPU 3 reads out data from the signal processing IC 2 whenever necessary. The host CPU 3, for example, identifies a region which has reacted to the pen-shaped source of light, on the basis of data concerning a plurality of regions.

In addition to this, the host CPU 3 performs processes, such as a user interface, corresponding to the coordinate values. In this occasion, the host CPU 3 can perform a user interface process by active use of a plurality of coordinate input values. For example, in a case where a user uses two pen-shaped sources of light, when the distance between the two sources of light is larger, the host CPU 3 performs a process of enlarging an image to be displayed in the display unit. When the distance between the two sources of light is smaller, the host CPU 3 performs a process of reducing an image to be displayed in the display unit.

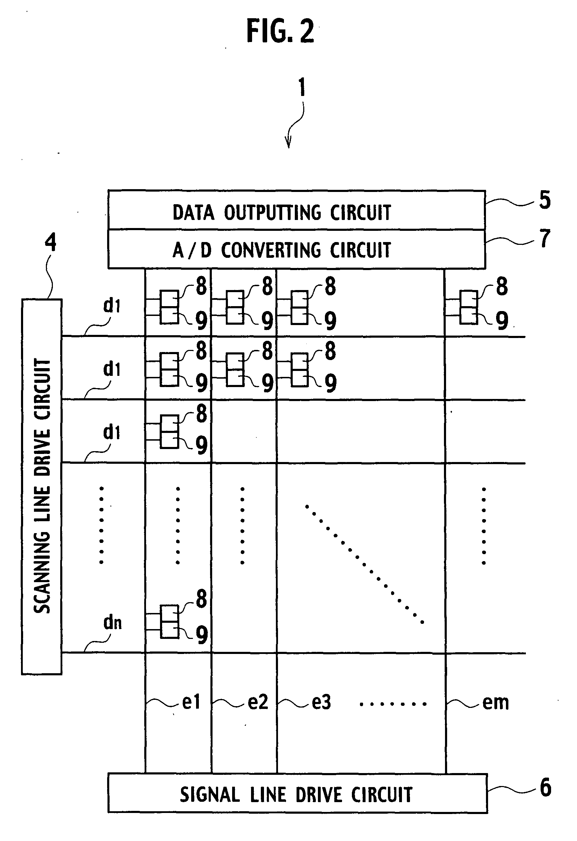

Fig. 2 shows a configuration of a circuit of the display unit 1. A scanning line drive circuit 4 drives scanning lines d1 to dn. A signal line drive circuit 6 drives signal lines e1 to em. Each of the parts where these scanning lines and these signal lines are crossed over with one another is provided with pixel units 8 and light detection units 9. Each of the pixel unit 8 has a function of displaying an image in the display screen. Each of the light detection unit 9 has a function of detecting beams of light made incident onto the display screen, and outputs, to the signal lines e1 to em, analog voltages corresponding to intensities of irradiated beams of light.

The display unit 1 further includes an image data generating unit configured to generate image data on the basis of information concerning detected beams of light. This image data generating unit is constituted of a 1-bit A/D converting circuit 7 and a data outputting circuit 5. The A/D converting circuit 7 converts analog voltage into binary digital data with precision represented by one bit. The data outputting circuit 5 sequentially outputs the binary data to the outside. Binary data concerning a pixel which has detected beams of light is defined as a theoretical value 1. Binary data concerning a pixel which has not detected beams of light is defined as a theoretical value 0. Image data for one frame can be obtained on the basis of binary data outputted from all of the light detection units 9. Incidentally, precision with which an A/D conversion is performed is not limited to one bit. Instead, the precision may be defined by an arbitrary number of bits. Furthermore, an additional A/D converter may be provided outside the display unit 1 so that the display unit 1 outputs analog signals instead of the converted signals.

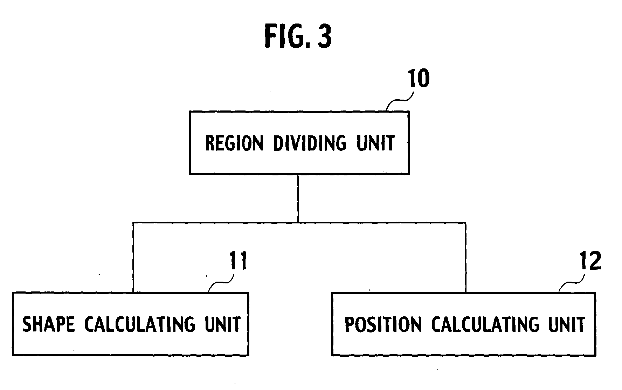

Fig. 3 shows a configuration of the signal processing IC 2. The signal processing IC 2 includes a region dividing unit 10, a shape calculating unit 11, and a position calculating unit 12. The region dividing unit 10 divides image data for each of the regions, where beams of light are respectively detected, on the basis of a gradation value of each pixel. The shape calculating unit 11 calculates shape parameters for identifying the shape of each of the divided regions. The position calculating 12 calculates the position of each of the divided regions. Detailed descriptions will be provided herein below for these functions.

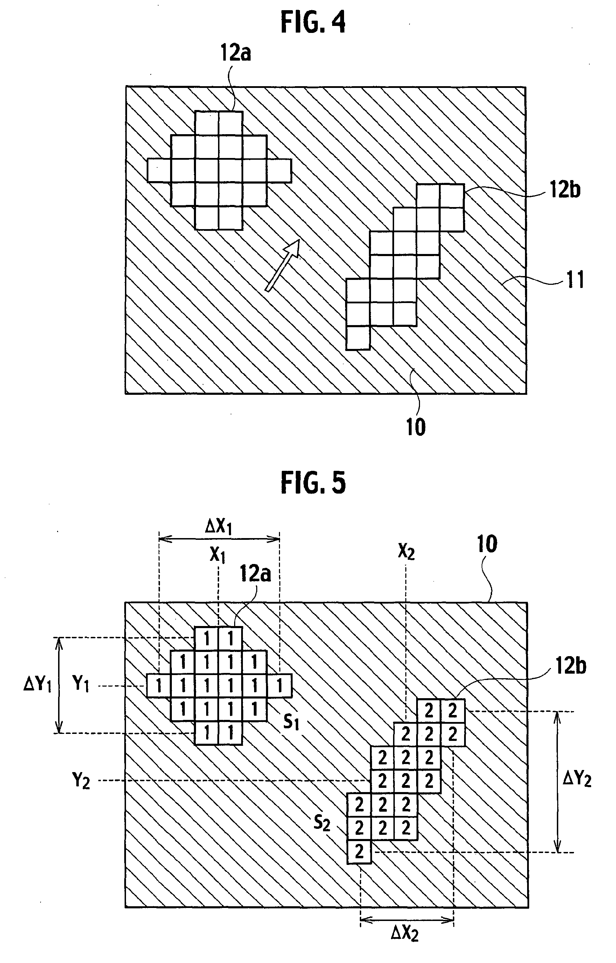

Fig. 4 schematically shows binary image data to be outputted from the display unit 1 to the signal processing IC 2. A smaller number of pixels than actual pixels are shown in Fig. 4 for convenience of understanding. In addition, suppose that defects and the like of an image have already been corrected.

A region 11 shaded in Fig. 4 is constituted of pixels which have not detected beams of light. Each of white regions 12a and 12b is constituted of pixels which have detected beams of light. The example shown in Fig. 4 has two regions which have detected beams of light. There exist a plurality of regions which have detected beams of light, for example, in a case where there is a region which reacts to a pen-shaped source of light and a region which reacts to environment light, or in a case where two pen-shaped sources of light are used. If a conventional coordinates calculating technique were used to calculate coordinates of the center of gravity for each of the white regions, coordinates are calculated which are in the vicinity of the middle between the two regions 12a and 12b, and which is indicated by an arrow in Fig. 4.

For this reason, in a case where one of the two regions is a region which has reacted to environmental light, the environmental light causes coordinate, which are different from the position of the pen-shaped source of light, to be calculated. In addition, in a case where two pen-shaped sources of light are used, none of the positions of the respective pen-shaped sources of light are calculated correctly. Both cases cause a malfunction.

With regard to the signal processing IC 2, it is defined that, in a case where gradation values respectively of two pixels which are adjacent to each other in any one of the upper, lower, left, right and diagonal directions are values indicating that beams of light have been detected, the two pixels belong to the same region where the beams of light have detected. On the basis of this definition, the region dividing unit 10 assigns one label commonly to pixels in one of the regions which have detected beams of light, and assigns another label commonly to pixels in another of the regions which have detected beams of light, in order to avoid the aforementioned malfunction. Thereby, the regions are distinguished from one another. Subsequently, the shape calculating unit 11 calculates the shape parameters only for regions to which the common label has been assigned. The positional coordinates calculating unit 12 calculates positions respectively only for regions to which a common label has been assigned.

Fig. 5 schematically shows a result of performing a labeling process on a binary image of Fig. 4 and calculating the positional coordinates and shape parameters for each label.

A label [1] is assigned to each of the pixel in the region 12a, and a label [2] is assigned to each of the pixel in the region 12b. A coordinate value is expressed by coordinates (X, Y) with the horizontal direction of the display unit defined as the X-axis and with the vertical direction of the display unit defined as the Y-axis. The area S of the region, the distribution width ΔX in the X-axis direction of the region and the distribution width ΔY in the Y-axis direction of the region are calculated as the shape parameters of the region. The center coordinates of the region is calculated as the positional coordinates.

With regard to the region 12a, its area S1, its distribution width ΔX1 in the X-axis direction and its distribution width ΔY1 in the Y-axis direction are calculated as its shape parameters, and its center coordinates (X1, Y1) is calculated as its positional coordinates. With regard to the region 12b, its area S2, its distribution width ΔX2 in the X-axis direction and its distribution width ΔY2 in the Y-axis direction are calculated as its shape parameters, and its center coordinates (X2, Y2) is calculated as its positional coordinates.

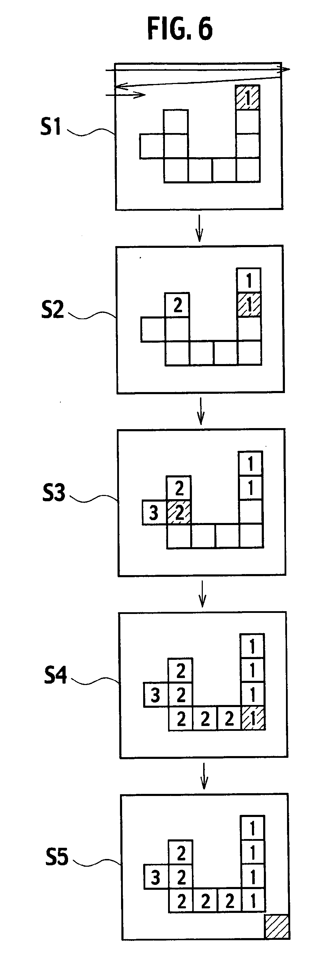

Fig. 6 shows a state where pixels are sequentially scanned from one row to another from the upper left pixel in a binary image to a lower right pixel in the binary image and a label is assigned to each of regions which have detected beams of light. At this point, a pixel upward adjacent to an attentional pixel which is supposed to have detected beams of light on the basis of a gradation value and a pixel leftward adjacent to the attentional pixel are examined. In a case where the adjacent pixels are pixels which have detected beams of light, the same label which has been assigned to the adjacent pixels is also assigned to the attentional pixel. In Fig. 6, any one of three types of numerals [1], [2] and [3] is assigned to each of the labels.

What attention needs to be paid to at this point is a case where the label of the upward adjacent pixel and the label of the leftward adjacent pixel are different from each other. In this case, for example, a label whose numeral is the smaller of the two is assigned to the attentional pixel. In Fig. 6, the label of a pixel upward adjacent to the shaded attentional pixel is [2], and the label of a pixel leftward adjacent to the shaded attentional pixel is [3], in step S3 in the third column out of steps S1 to S5 showing steps of labeling in time sequence. For this reason, the label of the attentional pixel is [2].

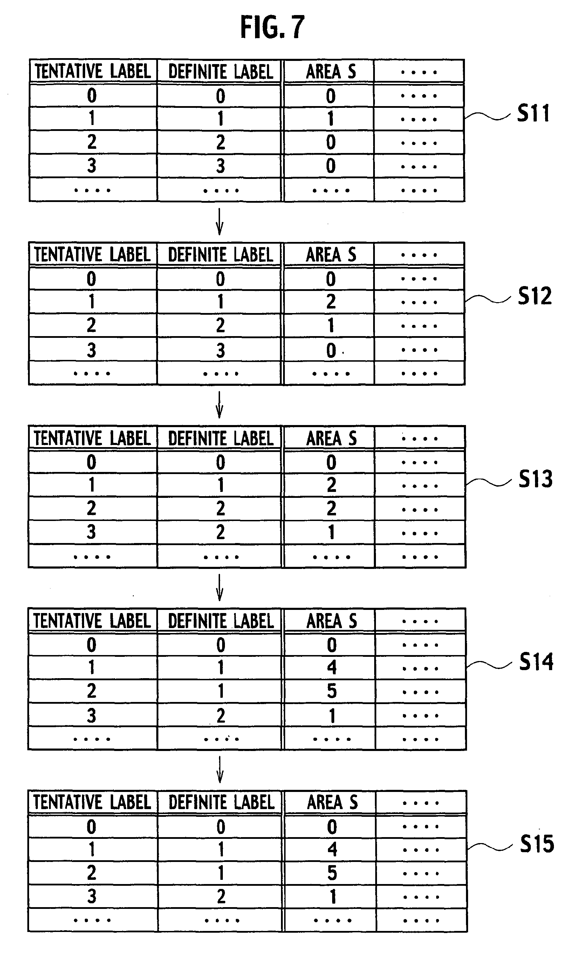

In addition, a pixel tentatively labeled [3] has the same gradation value as pixels adjacent to the pixel tentatively labeled [3] respectively in the right direction and in the diagonally right directions. For this reason, according to the aforementioned definition, a label [2] indicating that the pixel tentatively labeled [3] belongs to the same region as those pixels do is assigned, as a definite lable, to the pixel tentatively labeled [3]. This corresponding relationship is held in lookup tables shown in Fig. 7.

The lookup tables S11 to S 15 in Fig. 7 correspond respectively to steps S1 to S5 in Fig. 6 one to one. The lookup tables can be easily configured by use of a memory in an IC or the like. A "tentative label" to be tentatively assigned before the labeling, a "definite label" to be newly assigned by the labeling process and an "area S" representing a total area of labels which have been calculated on the basis of the number of the "definite labels" are provided as items of the lookup table.

In step S4 in the fourth column of Fig. 6, a pixel upward adjacent to the shaded attentional pixel is labeled [1], and a pixel leftward adjacent to the shaded attentional pixel is labeled [2]. For this reason, a label [1] is assigned to the attentional pixel. An association indicating that the tentative label [2] of the attentional pixel is originally an equivalent to the label [1] is written into the lookup table S14 of Fig. 7.

When a label is assigned and a lookup table is updated by the region dividing unit 10, the shape parameters can be concurrently calculated for each label by the shape calculating unit 11, and the positional coordinates can be concurrently calculated for each label by the position calculating unit 12.

In Fig. 7, a label is assigned to a pixel, and concurrently a corresponding area S is counted up. When the scanning to the lower right pixel in the binary image in this manner is completed, an association table of labels shown by a lookup table S15 in the lowermost column of Fig. 7 can be obtained.

Through this association table, it is learned that the label [2] is originally equal to the label [1], and that the label [3] is originally equal to the label [2]. Accordingly, it can be determined that each of the pixels to which any one of the labels [1], [2] and [3] is assigned is located in the same region. If the areas 4, 5 and 1 respectively occupied by the labels [1], [2] and [3] are all added up, the total area of these regions comes to "10."

Although not illustrated in Fig. 7, the center coordinate X1 of the region 12a shown in Fig. 5 may be included as an item of the lookup table. The center coordinate X1 can be found through the following procedure. Each time a label is assigned to a pixel, its X-coordinate is simultaneously added to a corresponding item in the lookup table. When the scanning is completed, X coordinates respectively of all of the pixels in the same region are summed. Thereafter, the center coordinate X can be found by dividing the sum by the area S1 (in other words, the number of the pixels). The center coordinate Y1 can be also found in the same manner.

The distribution width ΔX1 in the X-axis direction can be found through the following procedure. For each of the regions, a maximum value and a minimum value of the X coordinate are held in the lookup table. When the scanning is completed, the distribution width ΔX1 can be found by subtracting the minimum value from the maximum value for the same region. The distribution width ΔY1 in the Y-axis direction can be found in the same manner.

The center coordinate X2, the center coordinate Y2, the distribution width ΔX2 and the distribution width ΔY2 of the region 12b can be also found in the same manner. If the aforementioned method were performed, the positional coordinates and the shape parameters can be calculated for each of the different regions by scanning the binary image once only.

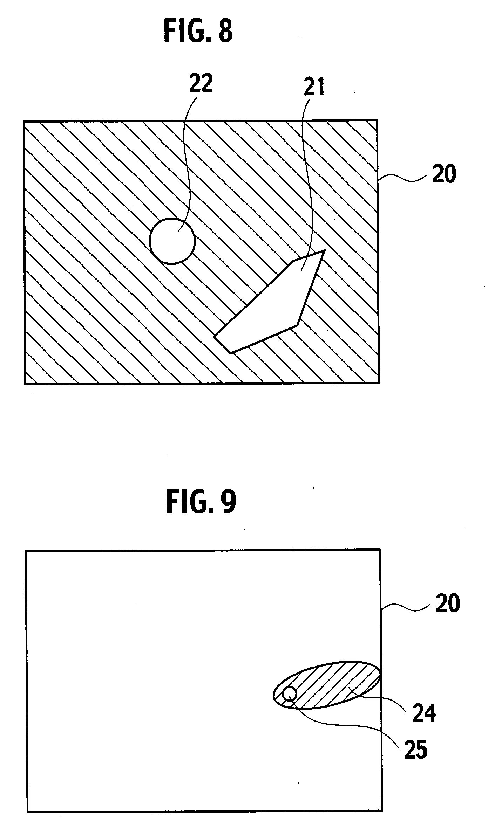

Figs. 8 to 11 schematically show the respective examples of processes to be performed by the host CPU 3 by use of a plurality of positional coordinates and various shape parameters. Figs. 8 and 9 respectively show conditions where the inputting of coordinates by use of a pen-shaped source of light is being disturbed by noise due to environment light which has been caused by light made incident from the outside.

The condition as shown in Fig. 8 may occur when some source of light to cause noise, other than the pen-shaped source of light, comes close to an image display screen 20. The host CPU 3 performs a simple calculation by use of the shape parameters such as the area, the distribution width in the X-axis direction and the distribution width in the Y-axis direction, thereby finding the peround of the region. Thereby, it is determined that a region 22 whose peround is the highest corresponds to the pen-shaped source of light. Otherwise, the area of the region 21 and the area of the region 22 are compared, and thus a region which is presumed to correspond to the pen-shaped source of light is selected out of the two regions 21 and 22.

The condition as shown in Fig. 9 may occur when an image display screen 23 is placed in a very bright outdoor environment and the pen-shaped source of light is used in the environment. In such a condition, the light detecting unit 9 does not respond to a region 24 over which a shadow of the pen of pen-shaped source of light is cast, but the light detecting unit 9 responds to a region 25 corresponding to the nib of the pen-shaped source of light. Accordingly, in this case, too, the host CPU 3 can use the area of the region as a criterion. In addition, only in a case where there is a region which reacts to beams of light in the shadowed region 24, the host CPU 3 can determine that the beams of light has come from the pen-shaped source of light.

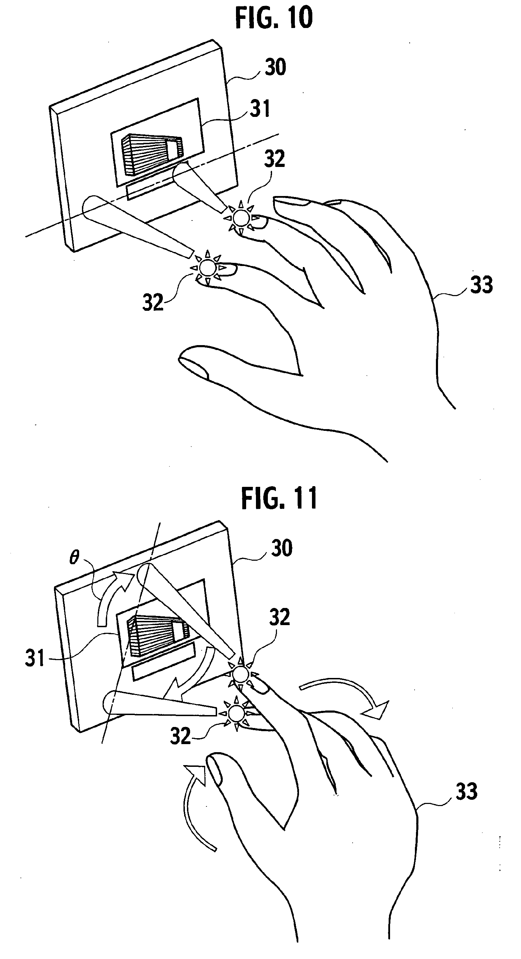

Figs. 10 and 11 respectively show examples of user interfaces to be performed by active use of a plurality of sources of light. In these case, a user who is an operator wears a glove 33, and the plurality of sources 32 of light are provided respectively to fingertips of this glove 33. An image 31 is displayed in the display screen 30 which is an object to be operated.

As shown in Fig. 10, the user irradiates beams of light, which the source 32 of light gives off, onto the display screen 30.

Subsequently, if the user rotates two fingers of the glove 33 as shown in Fig. 11, the sources 32 of light also rotate in response to the fingers' rotation. Since the sources 32 of light rotate, each of the two spots of light irradiated onto the display screen 30 also makes a rotational displacement in response. The rotational displacement of each of the two light spots is detected in the display screen 30, thus causing the image 31 to make a rotational displacement in response to the rotational displacement of each of the two light spots.

In Fig. 10, the number of the sources 32 of light is two. However, more sources 32 of light may be provided depending on the purpose of their operation. Otherwise, the number of the sources 32 of light may be limited to 2 at minimum.

According to the present embodiment, as described above, the region dividing unit 10 divides image data for each of the regions where beams of light have been respectively detected. Thereafter, for each of the regions, the shape calculating unit 11 calculates the shape parameters, and the position calculating unit 12 calculates the position. The host CPU 3 can clearly tell whether a region where beams of light have been detected is a region which has reacted to environmental light of the outside or a region which has reacted to a source of light. In addition, if positions of the respective regions were used, the exact coordinates of the source of light could be identified. This could prevent a malfunction from being caused due to environmental light.

For example, in a case where both a region which reacts to environmental light and a region which reacts to beams of light from the pen-shaped source of light occur in the display screen, if, first of all, the shape parameters were examined, it could be told what region is a region which has reacted to the pen-shaped source of light. If, subsequently, the position of the region were calculated, information concerning the position of the pen-shaped source of light could be obtained without causing a malfunction due to environmental light.

### SECOND EMBODIMENT

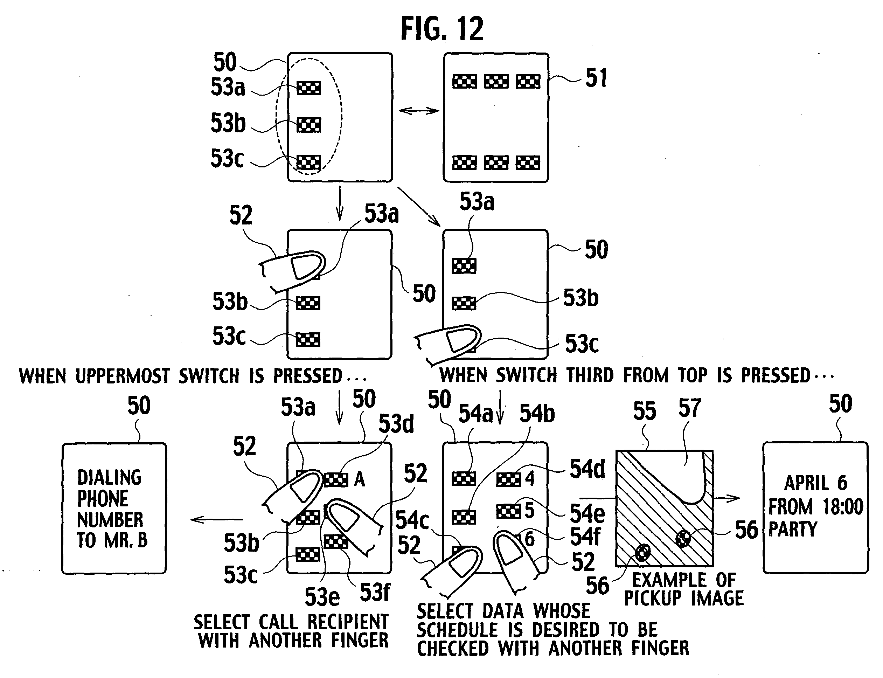

Fig. 12 shows a diagram of a screen transition for the purpose of explaining simultaneous input through two points in a display device according to a second embodiment. Here, display screens 50 and 51 of a mobile information terminal device such as a cellular phone are shown. The screen could be switched between the display screens 50 and 51 depending on their contents if the user selected the screen by pressing a plurality of switches displayed in each of the display screens with his/ her finger. For example, in the display screen 51, a plurality of switches (parts indicated by checkers in the screen) are displayed. If the user presses a switch designating his/her desired function out of these switches in the display screen 51, the switches in the display screen 51 are switched to switches 53a, 53b and 53c in the display screen 50.

A function is assigned to each of these switches 53a, 53b and 53c. While the user is pressing the uppermost switch 53a with the finger 52, 6 switches 53a to 53f to which other additional functions are respectively assigned, are displayed.

In a case where, for example, a telephone number is assigned to each of the 6 switches 53a to 53f, if the user continues pressing the switch 53a with one finger 52 and presses the switch 53e with another finger, which is currently not engaged, during the continuous pressing of the switch 53a, a function of "dialing the telephone number of Person B" which has been assigned to the switch 53e is activated so that a telephone call to Person B is placed.

In addition, while the user is pressing the switch 53c, the currently-displayed switches 53a to 53f are switched to 6 new switches 54a to 54f, and the new switches are displayed. If the switches 54f and 54c out of the switches thus displayed are pressed simultaneously with the two respective fingers 52, two detection points 56 and environment 57 are simultaneously recognized in a pickup image 55 to be recognized by the mobile information terminal device.

In the pickup image 55 as described above, the environmental light 57 is ignored by use of the method according to the first embodiment which has been already described, and the two detection points 56 are recognized as the two mutually-independent points. On the basis of this recognition, the simultaneous pressing of the two switches 54c and 54f causes an access to a schedule to be executed, and a message of, for example, "Party from 18:00 on April 6" is displayed in the display screen 50.

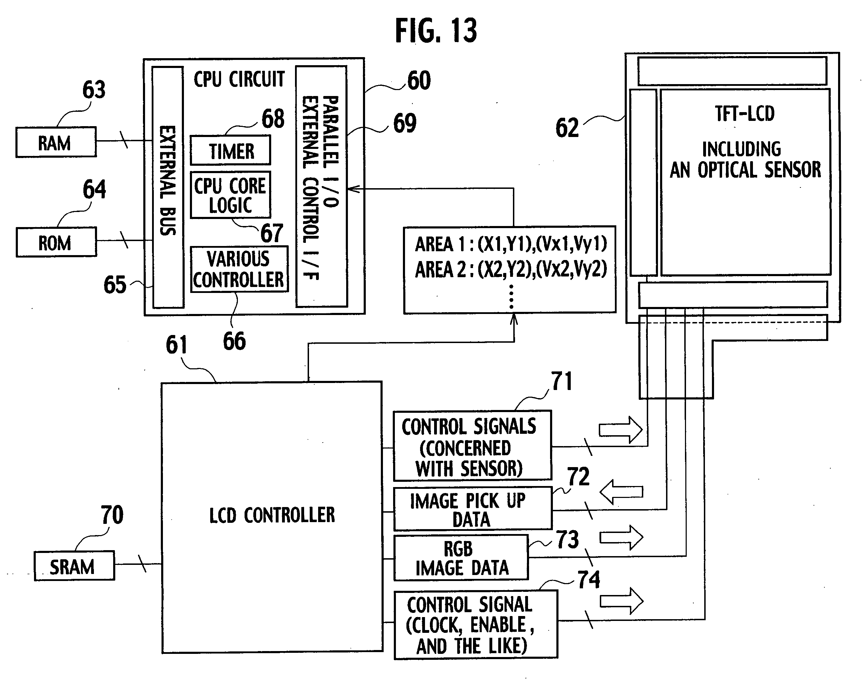

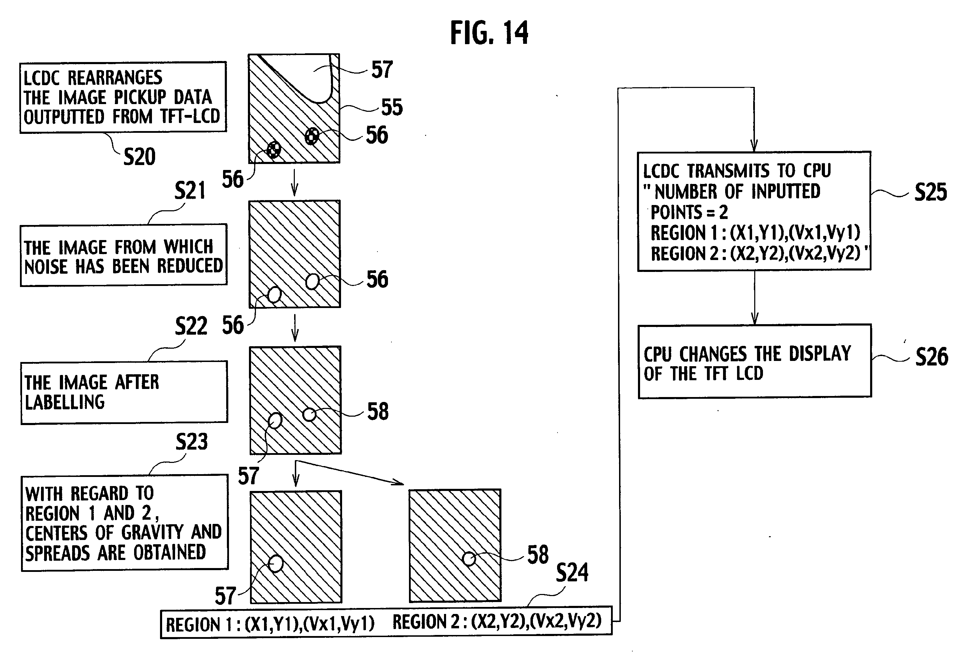

Next, descriptions will be provided for a procedure for performing a process of recognizing simultaneous input through two points with reference to Figs. 13 and 14. Fig. 13 shows a schematic configuration of a display device according to the present embodiment. This display device includes a CPU circuit (control microcomputer) 60, an LCDC (LCD controller) 61 and a TFT-LCD 62 including an optical sensor. This display device further includes a RAM 63, a ROM 64 and an SRAM 70.

The CPU circuit 60 includes an external bus 65, various controllers 66, a CPU core arithmetic and logic unit 67, and a timer 68. The CPU circuit 60 is connected to the LCDC 61 through a parallel I/O and an external control I/F. In addition, control signals (concerned with a sensor) 71, image pickup data 72, RGB image data 73 and control signals (a clock signal, an enable signal and the like) 74 are communicated between the LCDC 61 and the TFT-LCD 62 including the optical sensor.

Here, descriptions will be provided for a process of extracting the two detection points 56 in the pickup image 55 as the two mutually-independent points with reference to Fig. 14. First of all, suppose that the environmental light 57 which is unnecessary, and which has been made incident onto the display screen for some reason, as well as the two detection points 56 are picked up in the pickup image 55. The image pickup data which is going to be outputted from the TFT-LCD 62 including the optical sensor becomes serial data in the TFT-LCD 62, and the pickup data is inputted into the LCDC 61 through several lines of bus wiring. The LCDC 61 rearranges the image pickup data in order to associate the image pickup data with this (in step S20). Thereby, a pickup image where noise (the environment light 57) and the detection points are in situ can be obtained. Thereafter, a process is performed to make the checkered portion white and to make black the sheer noise (environment light 57) which has no meaningful pattern. Thus, an image from which noise has been reduced can be obtained, and only the two detection points 56 are extracted (in step S21).

Subsequently, the labeling process which has been described with regard to the first embodiment is performed, and an image after the labeling process is obtained. In the image thus obtained, a white circle on the left side of the pickup image 57 is caused to represent [region 1] 57, and a white circle on the right side of the pickup image 57 is caused to represent [region 2] 58. They are recognized separately (in step S21).

Thereafter, with regard to [region 1] 57 and [region 2] 58, coordinates of their respective centers of gravity and their spreads are obtained (in step S22). As a result of this calculation, values of [region 1]:(X1, Y1), (Vx1, Vy1) are found as the coordinates of the center of gravity, and the spread, of [region 1]. Similarly, values of [region 2]: (X2, Y2), (Vx2, Vy2) are found as the coordinates of the center of gravity, and the spread, of [region 2] (in step S23).

Then, the LCDC 61 transmits to the CPU circuit 60 data representing "the number of inputted points = 2, [region 1]: (X1, Y1), (Vx1, Vy1), [region 2]: (X2, Y2), (Vx2, Vy2)" (in step S24). Upon receipt of the data, the CPU circuit 60 controls the operation of the entire display device on the basis of "the number of inputted points, the coordinates of the center of gravity and the spread for each region." In addition, the CPU circuit 60 changes the display of the TFT-LCD 62 including the optical sensor.

The checkers in the present embodiment may be replaced with another pattern as long as the pattern enables the reflected image to be detected from the pickup image. The spread may be recognized by use of what can be associated with a motion of a finger pressing the display screen, for example, by use of the number of pixels in each region.

## Claims

1. A display device comprising:
a light detection unit configured to detect a beam of light made incident onto a display screen;
a image data generating unit configured to generate image data on a basis of information concerning the detected beam of light;
a region dividing unit configured to divide a region, where the beam of light has been detected, from the image data on the basis of a gradation value of each pixel;
a shape calculating unit configured to calculate shape parameters for identifying a shape of each divided region; and
a position calculating unit configured to calculate a position of each divided region.

2. The display device according to claim 1,
wherein the region dividing unit assigns one label commonly to pixels in one of the regions which have detected the beam of light, and assigns another label to pixels in another of the regions which have detected the beam of light, on a basis of a definition that, in a case where gradation values respectively of two pixels which are adjacent to each other in any one of the upper, lower, left, right and diagonal directions are values indicating that the beam of light has been detected, the two pixels belong to the same region where the beam of light has detected,
wherein the shape calculating unit calculates shape parameters respectively only for regions to which a common label has been assigned; and
wherein the position calculating unit calculates positions respectively only for regions to which a common label has been assigned.

3. The display device according to any one of claims 1 and 2,
wherein the shape parameters include at least one of an amount representing an area of the region, an amount representing a distribution width of the region in the horizontal direction, and an amount representing a distribution width of the region in the vertical direction.
